# EUROPEAN PATENT APPLICATION

(11) **EP 4 596 940 A1**
(43) Date of publication of application: **06.08.2025**
(21) Application number: 22959721.6
(22) Date of filing: 29.09.2022
(51) Int. Cl.: F16L 11/00, F16L 11/04, F15D 1/00, F15D 1/02, F42D 1/10, F42D 3/04, E21D 9/00, C06B 47/00

(54) **HOSE DEVICE FOR SIMULTANEOUSLY TRANSPORTING MULTIPLE ELEMENTS SEPARATELY**

(71) Applicant: Enaex Servicios S.A., Las Condes, Santiago (CL)
(72) Inventor: BARRIGA MELGAREJO, Jonhatan Octavio, Santiago (CL); LARA MARRO, Gloria del Pilar, Santiago (CL)
(74) Representative: Daub, Thomas
(86) International application number: PCT/CL2022/050099
(87) International publication number: WO 2024/065067

(57) **Abstract**

A multi-purpose hose is described, which reduces the time required for the loading procedure of the borehole drillings, said hose comprising multiple inner ducts, where signal cables, power supply, inspection probes and sensors are introduced, and it further allows injecting different fluids such as air, water, emulsions, etc. separately. Likewise, the described hose allows transporting the different components to prepare explosive emulsions separately and only combines them by introducing the same inside the borehole drilling in the hose outlet.

## Description

### FIELD OF THE INVENTION

The present invention relates to the mining and construction industry. In particular, the present invention relates to a hose device which allows the simultaneous transport of multiple elements in the inner structure thereof and these elements do not contact each other within the hose.

### BACKGROUND OF THE INVENTION

Nowadays, during the borehole loading procedure at a rock face, it is necessary to introduce various elements into the drillings in a sequential manner, such as borehole cleaning hoses that inject water and/or air, inspection probes to verify the depth and condition of the drilling, explosive emulsion loading-hoses, etc. As all the above-mentioned tasks are performed by separate instruments, the vehicles that load the equipment become bulkier so as to embrace more hoses and probes, making their movement in the underground mining environment more difficult. In addition, by requiring several hoses and probes, the procedures for positioning the components in front of the boreholes, inserting hoses and probes and their subsequent removal are repeated multiple times for each of the boreholes, extending the times required for the borehole loading procedure.

Additionally, as robotic explosives-loading technologies in underground mining advances -specifically in horizontal underground explosives loading for tunnel development, a series of tasks are required prior to explosives loading in order to ensure that said loading is carried out properly. Among these tasks are the cleaning of the drillings and the measurement of the depth, angle of the borehole, among others, where for each of these tasks it is necessary to use a different instrument contained in some way to a hose or other flexible element that is introduced to the borehole.

On the other hand, as the different tasks related to the loading of explosives are automated and human personnel are no longer present in the area of the drilling face, it also becomes necessary to reduce the number of tasks to be performed by robotic systems, by combining tasks that can be performed simultaneously when there are no humans in the vicinity.

Within the state of the art, we can find the publication US20210164765A1, which discloses a method for loading boreholes with bulk water-based suspension or watergel type explosives characterized by the sensitization of the product by mixing a nonexplosive or low sensitivity suspension matrix with compressed gas (e.g., air) at the end of the delivery hose. However, this document indicates that the air supply is provided by a separate line in another hose that is inserted into the explosive dosing hose. This creates interference problems among multiple hoses and necessitates maintaining spares for all hoses. In addition, more components mean more points of failure.

Therefore, it is desirable to reduce the time involved in the borehole loading procedure in order to improve production times. Furthermore, it is necessary to obtain a way to transport the different components for explosive emulsions separately, so that the final explosive is only combined at the moment of loading the borehole, thus avoiding transporting explosive mixed through pressurized circuits, valves, pumps, and hoses, where a risk of causing an accidental detonation is feasible. It is also desirable to have a safe way of transmitting electrical energy through the hose without causing accidental ignition of the components it carries, especially in hoses carrying explosive or flammable materials.

### BRIEF DESCRIPTION OF THE INVENTION

The present disclosure describes a multi-purpose hose that reduces the time required for the loading procedure of borehole drillings, comprising multiple inner ducts, where signal cables, power supply, inspection probes and sensors are introduced, and which also allows injecting different fluids such as air, water, emulsions, etc. separately. Likewise, the hose described allows transporting the different components to prepare explosive emulsions separately and only combines them by introducing the same inside the borehole drilling in the hose outlet.

The present hose device has two or more ducts that fluidly connect the ends of the hose, wherein the two or more ducts are separated by a separating body. The ducts of the hose device are adapted to carry air, water, emulsions, electrical cables, and signal-transmitting cables among others, allowing multiple operations associated with borehole loading to be performed without the need to change the hose inserted into the borehole, thus allowing inspection, preparation and explosives loading operations to be performed on boreholes more quickly

Due to the herein-disclosed technology, where the hose can comprise multiple ducts in the same structure, one or more of them can be used for air supply in the same application. Furthermore, due to the multiple ducts in its structure, it is possible to wire and add instrumentation using the same hose.

### DESCRIPTION OF THE FIGURES

Figure 1 shows a schematic view of a hose device of the present technology with multiple separate ducts inside.
Figure 2 shows a schematic view of another embodiment of the hose device of the present technology, wherein a fluid duct with a larger equivalent diameter and multiple smaller ducts on its periphery are observed.
Figure 3 shows a schematic view of another embodiment of the hose device of the present technology, wherein two fluid ducts with a larger equivalent diameter and two other smaller ducts are observed.
Figure 4 shows a schematic view of another embodiment of the hose device of Figure 3 but with a larger number of ducts.
Figures 5 and 6 show a schematic view of another embodiment of the hose device of the present technology, wherein a fluid duct with a larger equivalent diameter and multiple smaller ducts located on one side of the inner of the hose device are observed.
Figure 7 shows a schematic view of another embodiment of the hose device of the present technology with multiple ducts of different cross-sections separated inside.

### DETAILED DESCRIPTION OF THE INVENTION

The present invention relates to a mining hose device that allows multiple operations associated with the borehole loading without the need to change the hose inserted in the borehole, said hose comprising two or more ducts that fluidly connect the ends thereof, wherein the two or more ducts are separated by a separating body

The separator body is manufactured of a flexible electrically insulating material that allows winding and unwinding the hose device, while maintaining the separation between the ducts, and can be manufactured of PVC, HDPE, or rubber, among others.

The ducts have different geometries depending on the contents of the duct. Thus, the cross section of the ducts can be substantially circular, oval, square, triangular, hexagonal, regular polygons, irregular polygons, concave polygons, or convex polygons. However, geometries with smoother, more rounded shapes are preferable over those geometries with sharp vertices, since vertices tend to concentrate stresses and undergo fatigue in an accelerated manner, leading to premature failure of the ducts.

As mentioned, duct geometries are chosen based on the contents of the duct, thus circular and oval ducts are preferred when transporting fluids, as they distribute pressure more evenly. Similarly, rectangular ducts are preferred when flat cables are inserted withing them, such as those used in computer signal transmission.

Exemplary embodiments are described hereunder to illustrate the principles of the invention. Exemplary embodiments are provided to illustrate aspects of the invention, but the invention is not limited to any embodiment. The scope of the invention encompasses numerous alternatives, modifications, and equivalents, only limited by the embodiments of the claims.

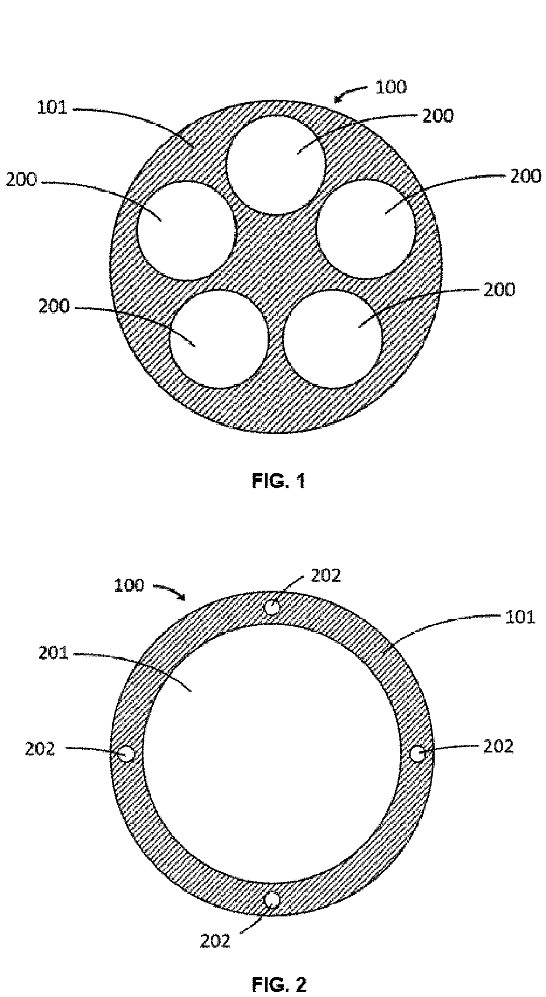

Figure 1 shows a schematic view of a hose device 100 of the present technology with multiple ducts 200 that fluidly connect the ends of hose 100, while being apart inside by a separator body 101, allowing different elements to be transferred between the ends of the hose 100 without mixing or contacting the same inside the hose 100.

Figure 2 shows a schematic view of another embodiment of the hose device 100 of the present technology, wherein a fluid duct 201 with a larger diameter or an equivalent larger diameter and multiple ducts smaller at their periphery are observed, which are separated inside by a separating body 101, wherein the smaller ducts are communication and energizing ducts 202. This allows, for example, a liquid or gaseous fluid to be transported, and also comprising a sensor at the tip, which can be energized and send its information through wires inserted into the hose body, thus reducing the risk of cable cutting due to external interaction of the cable with the hose.

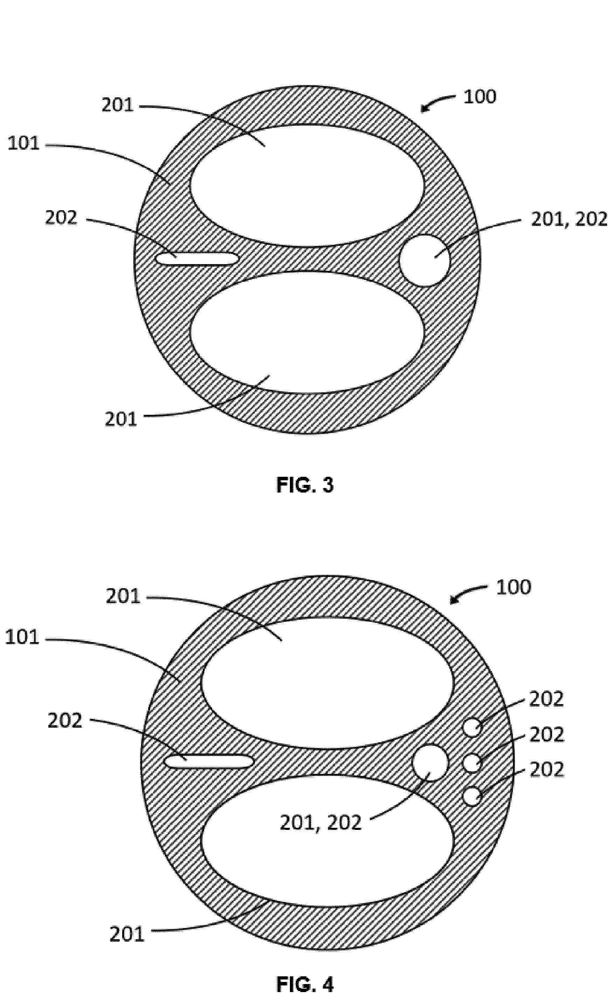

Figure 3 shows a schematic view of another embodiment of the hose device 100 of the present technology, wherein two fluid ducts 201 with a larger equivalent diameter are observed, allowing, for example, carrying in one of the fluid ducts 201 an explosives matrix and carrying in the other of the fluid ducts 201 an explosives additive, so that the components are transferred through the hose device 100. Additionally, two other minor ducts are illustrated, wherein one of the minor ducts is a communication and energizing duct 202 with a flattened cross-section that facilitates passing multiple cables in an orderly manner, side by side, or facilitates passing flat cables for data transfer. The other of minor ducts is a communication and energizing duct 202 or a fluid duct 201, through which it is possible to pass, for example, pressurized water or air for washing and/or cleaning the area at the outlet of the hose device 100.

Figure 4 shows a schematic view of another embodiment of the hose device of Figure 3, but with a greater number of communication and energizing ducts 202 in the outer area of the separator body 101 farthest from the two fluid ducts 201 with a larger equivalent diameter. This allows the addition of energization and data transmission for additional sensors to measure characteristics of the transported fluids in each of the larger equivalent diameter ducts. Sensors can also be used to measure the space where the hose will move, measure distance, velocity, temperature, or any other physical variable that is required.

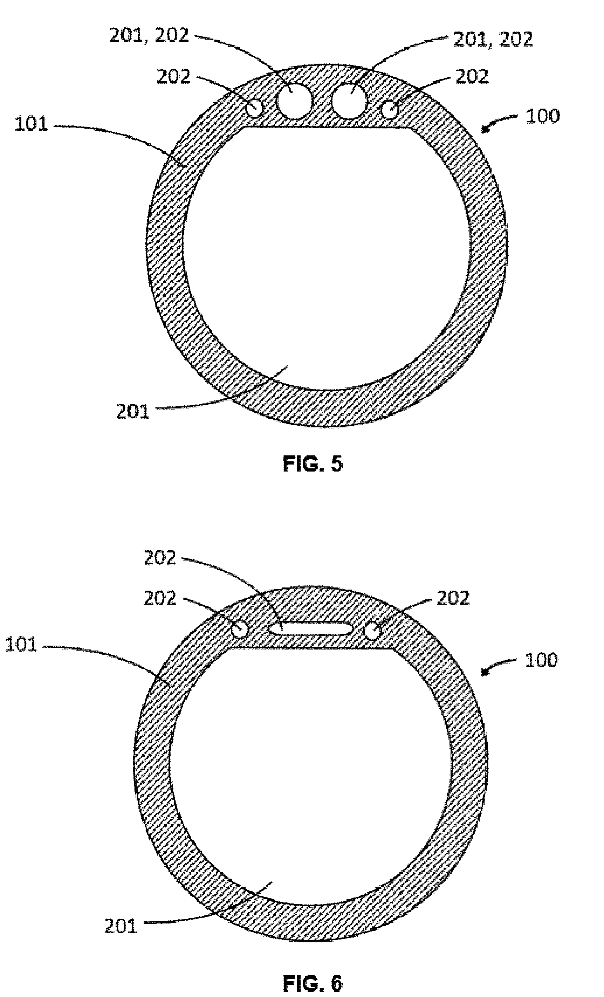

Figures 5 and 6 show a schematic view of another embodiment of the hose device 100 of the present technology, wherein a fluid duct 201 with a larger equivalent diameter and multiple fluid ducts 201 and communication and energizing ducts 202 of smaller equivalent diameter are observed, and they are grouped on one side of the separator body 101. This allows, for example, a single side of the hose to be reinforced in the event that the multiple fluid ducts 201 and communication and energizing ducts 202 require additional protection, thus preserving in a better manner the flexibility features of the hose, even when reinforcements are carried. In addition, the thickness of these areas can be adjusted so that the larger area is capable of withstanding a given working pressure, if necessary.

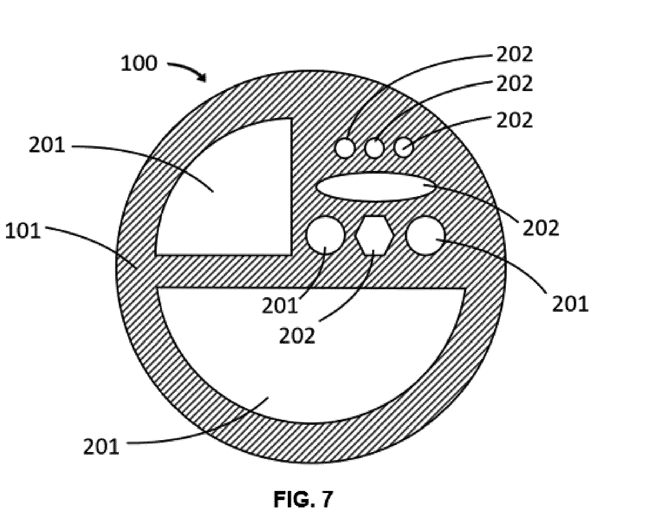

Figure 7 shows a schematic view of another embodiment of the hose device 100 of the present technology with multiple fluid ducts 201 and communication and energizing ducts 202 of different cross sections separated inside by the separator body 101. This allows the use of different types of cables with various geometries and uses, fluids of different densities and any type of material required, minimizing the number of additional systems entering with the hose, simplifying the system and decreasing points of failure due to interferences that commonly occur when working with multiple cables and hoses in the same location.

The hose may be constructed of an antistatic base material, especially where explosive materials or raw materials to form explosive materials are conveyed through the hose. When the hose does not convey explosive materials or raw materials to form explosive materials, then the hose is preferably constructed using flexible polymeric materials, which may or may not have antistatic properties. For ducts where fluid is flowing, the wall of the duct has a wall thick enough to withstand the working pressure, which may be variable, depending on the fluid.

The ducts can be internally coated with flexible polymeric materials to improve their abrasion resistance or to reduce the friction of the inner surface.

In some embodiments of the present technology the hose is externally coated by flexible or articulated coatings based on polymeric materials, ceramic materials, metallic materials, composite materials, maintaining the flexibility required to wind the hose on a reel. The composite materials can be, for example, based on glass fiber, carbon fibers, polymeric fibers, or metallic fibers.

In the present technology the selection of the hose diameters is made on the basis of the technical parameters to be met. For example, the outer diameter is defined on the basis of the diameter of the drillings where the hose is inserted, thus determining that the outer diameter must be smaller than the diameter of the drilling.

For the inner diameters of the circular section ducts and the equivalent diameter of the non-circular section ducts, the wall thickness of the separator body is determined, so that it supports the content, whether cables or fluids and resists the stresses of pressure, torsion, and traction to which the hose is subjected. For ducts carrying fluids, the diameter or equivalent diameter thereof is given by the load capacity of the pump with which the fluid is pumped through the duct.

Regarding the length, it is noted that this is only limited by the losses of the elements that are transported inside, pressure losses in the case of fluids and losses in signal quality or electrical resistance in the case of communication cables and power cables.

In one embodiment, the technology relates to a hose device 100 comprising at least two ducts 200 fluidly connecting the ends of the hose 100, wherein the at least two ducts 200 are separated by a separating body 101, allowing cables and fluids to be transferred between the ends of the hose 100 without mixing or contacting the same inside the hose 100. Preferably, at least one duct 200 is a fluid duct 201.

In a preferred embodiment of the present technology, at least one fluid duct (201) conveys one of the following elements: air, water, explosive emulsion, an explosive matrix, and an explosive additive.

In a preferred embodiment of the present technology, at least one duct 200 is a communication and energizing duct 202 carrying a power supply cable and/or a communication cable.

In a preferred embodiment of the present technology, at least two ducts 200 are fluid ducts 201, wherein one of the fluid ducts 201 is adapted to convey an explosives matrix and the other of the fluid ducts 201 is adapted to convey an explosives additive, wherein the hose device 100 further comprises a mixer at the outlet end for mixing the explosives matrix with the explosives additive. This facilitates the transportation of raw materials for forming explosives separately, without the need to transport explosive emulsions inside the hose.

In a preferred embodiment of the present technology, the mixer is a passive mixer; however, an active mechanical mixer energized and controlled through one or more communication and energizing ducts 202 of the same hose device 100 may also be used.

In a preferred embodiment of the present technology, the hose device 100 further comprises at least one sensor at its outlet end, energized and controlled through one or more communication and energization ducts 202 of the same hose device 100. The at least one sensor may be, for example, an inertial measurement unit (IMU), a pressure sensor, a flow meter, a thermocouple, among others.

In a preferred embodiment of the present technology, the hose device 100 further comprises a flexible or articulated outer protective covering.

### APPLICATION EXAMPLES

### EXAMPLE 1

In one embodiment of the present technology, a PVC hose was manufactured with a main opening and multiple ducts, and in the inner part thereof a signal cable and a power cable are provided for a sensor that measures the distance traveled and internal angles of each borehole. High-pressure air is supplied through the main opening of the hose to clean the boreholes, while the sensor performs the distance and angle measurements. The sensor is encapsulated and mounted at the tip, so that the cleaning air does not affect the sensor, which is isolated. The hose is stored on a reel from which the compressor that supplies the air is connected, and the signal is retrieved from the cable that delivers the measurement data. Furthermore, the hose enters and exits the borehole driven by a hose puller driven by hydraulic motors; however, pneumatic, or electric pullers are also suitable for this task.

In this embodiment, the time required to clean a borehole, measure the depth thereof and its inclination angles was compared by comparing the time used by conventional methods using multiple flexible elements in a sequential manner to the time required by the hose of the present technology, thus determining that, for this particular case, the described hose allows reducing the times between 30% and 50% in the total time required to load the drillings with explosives.

### EXAMPLE 2

In another embodiment of the present technology, a PVC hose was manufactured for underground mining and horizontal borehole loading. This hose was manufactured with two ducts, where one of the ducts has a larger diameter than the other. Explosive matrix is dispensed through the larger diameter duct and additive is dispensed in the smaller diameter duct, while at the outlet end of hose the explosive matrix and additive are mixed by a static mixer to form an explosive. The hose has the capacity to withstand the pumping pressure in case the explosive product is pumpable, in order to fill the borehole completely.

In this embodiment, the technology described here allows a single hose to enter the drillings to fill them with explosive; however, the explosive is only prepared when the components for its formation come out of the hose, so there is no explosive material inside the hose while it is being loaded. In this way, the hose only contains raw materials, providing a safety advantage over conventional hoses, where the mixture of explosive matrix and additive is carried out before the components enter the hose, so the hoses carry explosive inside.

It shall be noted that when there is a failure in the process and the hose must be cut, state-of-the-art hoses are left with explosive material inside and the disposal operation requires special care to avoid accidental detonation of the explosive inside the hose. On the contrary, in this embodiment of the present technology, the hose can be cut and washed with less risk, since the hose does not contain explosives and can be washed with water without risk of crystallization of the explosive.

### REFERENCE NUMBERS

The following is a list of the components of the invention and their respective reference numbers in the figures.
- 100: Hose device
- 101: Separator body
- 200: Duct
- 201: Fluid Duct
- 202: Communication and Energizing Duct

Finally, it shall be noted that various particular parameters of the invention, such as dimensions, choice of materials, and specific aspects of the above-described preferred configurations may vary or be modified depending on operating requirements. Accordingly, the above-described specific configurations are not intended to be limiting, and such variations and/or modifications are within the spirit and scope of the invention.

## Claims

1. A hose device comprising at least two ducts fluidly connecting the ends of the hose, wherein the at least two ducts are separated by a separator body.

2. The hose device according to claim 1, wherein at least one duct is a fluid duct.

3. The hose device according to claim 2, wherein the at least one fluid duct conveys one element selected from air, water, explosive emulsion, an explosive matrix, and an explosive additive.

4. The hose device according to claim 1, wherein at least two ducts are fluid ducts, wherein one of the fluid ducts carries an explosives matrix and the other of the fluid ducts carries an explosives additive, wherein the hose device further comprises a mixer at the outlet end for mixing the explosives matrix with the explosives additive.

5. The hose device according to claim 4, wherein the mixer is a passive mixer.

6. The hose device according to claim 1, wherein the at least one duct is a communication and energizing duct carrying an electrical power cable and/or a communication cable.

7. The hose device according to claim 6, wherein it further comprises at least one sensor at its outlet end.

8. The hose device according to claim 7, wherein the at least one sensor is an IMU.

9. The hose device according to claim 1, wherein it further comprises a flexible or hinged outer protective covering.
